# EUROPÄISCHE PATENTANMELDUNG

(11) **EP 1 655 685 A2**
(43) Veröffentlichungstag der Anmeldung: **10.05.2006**
(21) Anmeldenummer: 05022320.5
(22) Anmeldetag: 13.10.2005
(51) Int. Cl.: G06K 7/00, H04B 1/38

(54) **Kontaktiervorrichtung für eine Chipkarte, insbesondere für eine SIM-Karte**

(30) Priorität: 09.11.2004 DE 102004054270
(71) Anmelder: Lumberg Connect GmbH & Co. KG, 58579 Schalksmühle (DE)
(72) Erfinder: Richter, Michael, 58579 Schalksmühle (DE); Bohn, Jürgen, 58511 Lüdenscheid (DE)
(74) Vertreter: Ostriga, Sonnet, Wirths & Roche

(57) **Zusammenfassung**

Dargestellt und beschrieben ist eine Kontaktiervorrichtung für eine Chipkarte, insbesondere für eine SIM-Karte eines elektronischen Geräts wie z.B. Chipkartenlesegerät, Mobiltelefon od.dgl., mit einem Kontaktträger und darin aufgenommenen Kontaktelementen zur Verbindung der Kontakte der Chipkarte mit Leiterbahnen eines in dem Gerät enthaltenen Schaltungsträgers wie Leiterplatte und mit einem Deckel, der mittels einer Scharnieranordnung schwenkbar am Kontaktträger gelagert ist und wobei die Scharnieranordnung gelenkachslos als Steckrastverbindung ausgebildet ist.

Des weiteren weist der Deckel der Kontaktiervorrichtung für die Chipkarte eine Aufnahme auf, die lediglich in unmittelbarer Nachbarschaft zur Scharnieranordnung vorgesehen ist und die durch ihre Anordnung und/oder Ausbildung bei geöffnetem Deckel der Chipkarte zwischen Deckel und Kontaktträger eine Schräglage ermöglicht, in der sie sich leicht greifen lässt.

## Beschreibung

Die Erfindung betrifft eine Kontaktiervorrichtung für eine Chipkarte, insbesondere für eine SIM-Karte, nach dem Oberbegriff des unabhängigen Anspruchs 1.

Derartige Kontaktiervorrichtungen, in der Umgangssprache und auch in der Patentliteratur häufig unzutreffend mit "Chipkarten-Leser", "SIM-Card-Reader" od. dgl. bezeichnet, dienen zur Halterung und Bereitstellung der elektrischen Kontaktierung der Kontakte einer Chip- oder SIM-Karte (SIM = "**S**ubscriber **I**dentity **M**odule") mit Leiterbahnen eines Schaltungsträgers wie insbesondere einer Leiterplatte, die in einem elektronischen Gerät, z.B. einem Mobiltelefon, untergebracht ist.

Eine Kontaktiervorrichtung solcher Art ist beispielsweise durch die DE 102 38 156 A1 bekannt geworden. Die Scharnieranordnung zur schwenkbeweglichen Lagerung des Deckels relativ zum Kontaktträger umfasst kontaktträgerseitig Lagerzapfen und deckelseitig einen hinteren umgerollten Rand, der eine Lagerhülse ausbildet, in die die Lagerzapfen gleitschlüssig eingreifen. Die Lagerzapfen ragen von Lagerböckchen ab, die z.B. dem Isolierstoffkorpus des Kontaktträgers angeformt sind. Sowohl bei der Montage als auch im Betrieb besteht eine gewisse Gefahr, dass die Lagerzapfen abbrechen könnten. Im übrigen weist der Deckel dieser bekannten Kontaktiervorrichtung eine schienenförmige Aufnahme für die Chipkarte auf, die in die Aufnahme eingeführt und dann zusammen mit dem Deckel in die Funktionslage am Kontaktträger verschwenkt wird.

Im Zuge der insbesondere mit der UMTS-Technik einhergehenden weiteren Miniaturisierung wird es künftig Chipkarten erheblich kleinerer Abmessungen geben. ETSI (European Telecommunications Standards Institute) hat SIM-Karten der Dimension 25 x15 mm als sog. "dritten Formfaktor" zugelassen, die vornehmlich in UMTS-Geräten eingesetzt werden sollen. Diese neue Karte wird auch als USIM oder UICC (UICC = **U**MTS **I**ntegrated **C**ircuit **C**ard) bezeichnet.

Entsprechend der Tatsache, dass die neue USIM Chipkarte nur so lang und deutlich schmaler ist als die alte SIM-Karte, sind die Kontaktiervorrichtungen diesen kleineren Chipkarten anzupassen. Das verlangt demnach eine weitere Miniaturisierung auch der Kontaktiervorrichtungen.

Hier setzt die Erfindung ein. Ausgehend von der Erkenntnis, dass die geforderte weitergehende Miniaturisierung am ehesten zu erreichen ist, wenn sie mit baulicher Vereinfachung der Kontaktiervorrichtung einhergeht, liegt der vorliegenden Erfindung im wesentlichen die Aufgabe zugrunde, eine Kontaktiervorrichtung der als bekannt vorausgesetzten Art insbesondere im Hinblick auf ihren Einsatz mit USIMs bzw. UICCs geschickt weiterzubilden und besonders einfach zu gestalten.

Eine erste Lösung dieser Aufgabe besteht in den Merkmalen des unabhängigen Anspruchs 1. Dem zufolge ist die Erfindung dadurch gekennzeichnet, dass die Scharnieranordnung gelenkachslos als Steckrastverbindung ausgebildet ist. "Gelenkachslos" im Sinne der Erfindung bedeutet, dass zwar eine geometrische Achse vorhanden ist, die die Schwenkmittellinie für die Relativbewegung zwischen Deckel und Kontaktträger definiert, dass jedoch keine körperliche Achse in Form eines Stiftes oder als Achszapfen oder -stummeln vorgesehen ist.

Demnach besteht der wesentliche Kern der Erfindung darin, dass man Deckel und Kontaktträger lediglich zusammenzustecken braucht, womit sich die geometrische Scharnier- oder Gelenkachse ausbildet und die Teile funktionsgerecht schwenkbar aneinander gefesselt sind.

Eine Ausführungsform der Erfindung sieht vor, dass die Scharnieranordnung Hakenflächen einenteils und Hintergriffsflächen für diese andernteils umfasst. Vorzugsweise sind hierbei die Hakenflächen an Hakenstegen einenteils und die Hintergriffsflächen an Durchbrechungen zum Durchstecken der Hakenflächen andernteils ausgebildet sind.

Vorteilhaft ist es, wenn sowohl die Hakenflächen als auch die Hintergriffsflächen an Metallteilen ausgebildet sind, deren einer dem Deckel und deren anderer dem Kontaktträger zugeordnet ist. Auf diese Weise schafft die Gelenkverbindung die Möglichkeit der elektrischen Schirmung durch galvanisch leitende Verbindung eines metallischen Deckels über die Haken- und Hintergriffsflächen zu einer Potentialleitung auf dem Schaltungsträger des Geräts.

Gemäß einer bevorzugten Ausführungsform der Erfindung sind die Hakenflächen einstückig-stoffschlüssig mit dem Deckel ausgebildet, während die Hintergriffsflächen an einer mit dem Kontaktträger fest verbundenen Lasche ausgebildet sind, die einen Verankerungsabschnitt aufweisen kann, mit dem sie an dem Kontaktträger befestigt ist.

Um die erwähnte Schirmung auf einfachste Weise zu erreichen, sieht die Erfindung vor, dass die Lasche eine Lötzunge zur elektrisch leitenden Verbindung des Deckels mit einem Masseanschluss des in dem Gerät enthaltenen Schaltungsträgers aufweist.

Was die besonders einfache und geschickte Ausbildung der gelenkachslosen Scharnieranordnung betrifft, ist eine Ausführung bevorzugt, die dadurch gekennzeichnet ist, dass die Hakenflächen an Federzungen des Deckels ausgebildet sind, die einen Schaft und einen dem gegenüber verbreiterten Haken-Kopf aufweisen und dass ferner die Durchbrechungen spaltartig ausgebildet sind und eine Spaltweise aufweisen, welche mindestens der Breite der Haken-Köpfe der Federzungen entspricht.

Wenn der Deckel mit dem Kontaktträger steckverbunden wird, durchgreifen die Haken-Köpfe der Federzungen unter vorübergehendem seitlichem Einfedern die Durchbrechungen. Sodann rasten bzw. schnappen die Haken-Köpfe der Federzungen selbsttätig hinter die Umrandungen der Durchbrechungen, welche die Hintergriffsflächen für die sie kontaktierenden Hakenflächen darstellen. Somit ist die Scharnieranordnung durch einen simplen Steckvorgang hergestellt und gesichert. Der Steckvorgang erfolgt vorteilhaft in Längsrichtung des Deckels, wodurch die an der Steckverbindung bzw. der Scharnieranordnung beteiligten Teile geringstmöglich belastet werden, was auch für den Betriebszustand der Kontaktiervorrichtung gilt, in dem die Kontakte Federkräfte auf den Deckel ausüben.

Eine zweite Lösung der eingangs gestellten Aufgabe der geschickten Vereinfachung besteht in den Merkmalen des unabhängigen Anspruchs 12. Dem zufolge ist die Erfindung bei einer Kontaktiervorrichtung, deren Deckel eine Aufnahme für die Chipkarte aufweist, dadurch gekennzeichnet, dass die Aufnahme lediglich in unmittelbarer Nachbarschaft zur Scharnieranordnung vorgesehen ist.

Ein konkretes Ausführungsbeispiel sieht hierbei vor, dass die Aufnahme für die Chipkarte aus randlich des Deckels aus diesem ausgeformte Zungen gebildet ist, die kurze Aufnahmetaschen für in Einsteckrichtung betrachtet vorn liegende Seitenrandbereiche der Chipkarte ausbilden. Insbesondere ist die Kontaktiervorrichtung gekennzeichnet durch eine Anordnung und/oder Ausbildung der Aufnahme für die Chipkarte derart, dass diese bei geöffnetem Deckel eine Schräglage zwischen Deckel und Kontaktträger erhält, in der sie sich frei greifen lässt.

Diese auf sehr einfache Art und Weise und mit minimalem Werkstoffeinsatz für den Deckel einhergehende Bereitstellung der Schräglage der Chipkarte vereinfacht und erleichtert deren Handhabung namentlich im Zusammenhang mit den äußerst kleinen USIM's bzw. UICC's ganz beträchtlich.

Im übrigen wird die Erfindung nachfolgend unter Bezugnahme auf in den beiliegenden Zeichnungen dargestellte Ausführungsbeispiele näher erläutert. Es zeigen:
- Fig. 1: eine perspektivische Ansicht einer Kontaktiervorrichtung mit geöffnetem Deckel, betrachtet von der Einsteckseite einer hier nicht gezeigten Chipkarte,
- Fig. 2: eine perspektivische rückwärtige Ansicht der Kontaktiervorrichtung nach Fig. 1,
- Fig. 3: die in Fig. 2 mit III bezeichnete Einzelheit in erheblich vergrößertem Maßstab (ca. 20:1 der natürlichen Größe),
- Fig. 4: einen Längsschnitt durch die Kontaktiervorrichtung bei geschlossenem Deckel,
- Fig. 5: einen Querschnitt durch die Kontaktiervorrichtung entsprechend der Schnittlinie V-V in Fig. 4,
- Fig. 6a: die in Fig. 5 mit VI bezeichnete Einzelheit einer noch nicht gekuppelten Scharnieranordnung in erheblich vergrößertem Maßstab,
- Fig.6b: die Scharnieranordnung der Fig. 5 in gekuppeltem Funktionszustand,
- Fig. 7: eine perspektivische Unteransicht unter die Kontaktiervorrichtung mit Blick auf deren Lötseite, und
- Fig.8: die in Fig. 7 mit VIII bezeichnete Einzelheit in erheblich vergrößertem Maßstab (ca. 20:1 der natürlichen Größe).

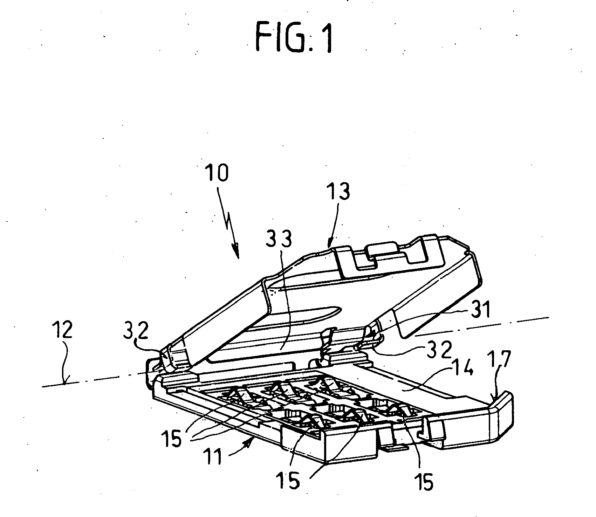

Fig. 1 zeigt eine insgesamt mit 10 bezeichnete Kontaktiervorrichtung für Chipkarten, insbesondere für SIM oder USIM- bzw. UICC-Karten, wie sie beispielsweise in Mobiltelefonen eingesetzt werden. Die Kontaktiervorrichtung 10 umfasst einen Kontaktträger 11 und einen um eine geometrisch zu verstehende Scharnierachse 12 schwenkbar daran angelenkten Deckel 13.

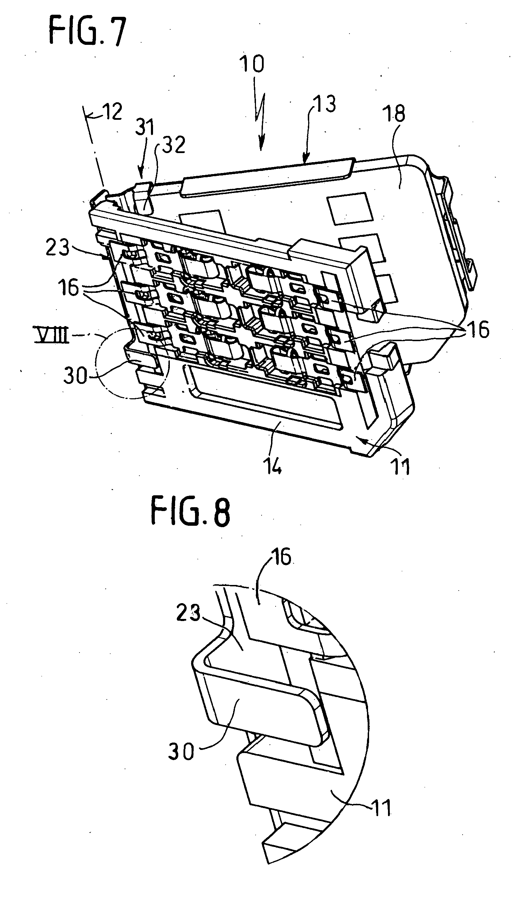

Im Kontaktträger 11, dessen Korpus 14 aus elektrisch nicht leitendem Isoliermaterial, insbesondere Kunststoff besteht, sind - beim Ausführungsbeispiel sechs - Lesekontakte 15 angeordnet zur Kontaktierung mit Kontakten einer Chipkarte 18 (Fig. 7), die in noch zu beschreibender Weise zwischen Kontaktträger 11 und Deckel 13 in die Vorrichtung 10 eingesetzt wird. Mit 16 (ebenfalls Fig. 7) sind SMD-Lötfüßchen bezeichnet, die werkstoffeinheitlich-stoffschlüssiger Bestandteil der Lesekontakte 15 sind und die galvanische Verbindung zu einem ebenfalls nicht gezeigten Schaltungsträger, also insbesondere einer Leiterplatte dienen.

Mit 17 ist eine am Kontaktträger 11 angebrachte Codier-Schrägfläche bezeichnet, die sicherstellt, dass die Chipkarte, die ihrerseits bekanntermaßen eine entsprechend gebrochene Ecke aufweist, nur mit ihrer korrekten Ausrichtung in die Kontaktiervorrichtung 10 eingesetzt werden kann.

Der Deckel 13 besteht beim dargestellten Ausführungsbeispiel aus einem Blech-Stanz-Biegeteil, also aus einem elektrisch leitenden Material. Er könnte auch aus anderen leitfähigen Materialen bestehen, z.B. aus elektrisch leitendem oder leitfähig beschichtetem Kunststoff.

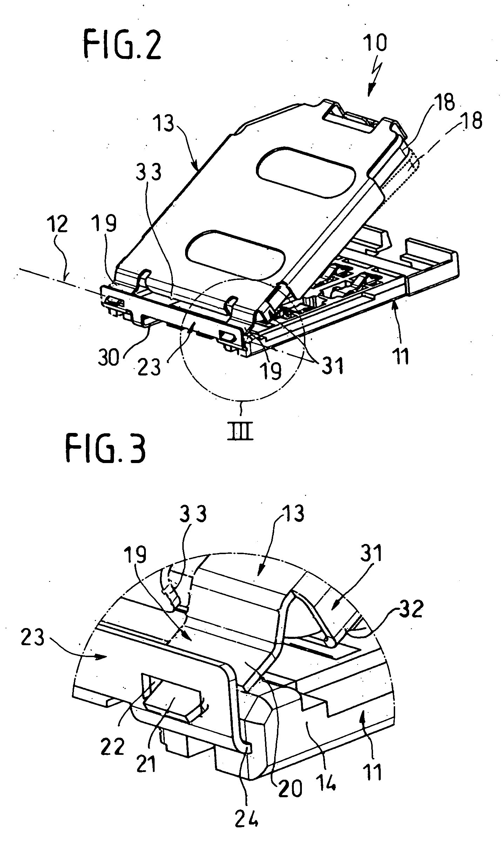

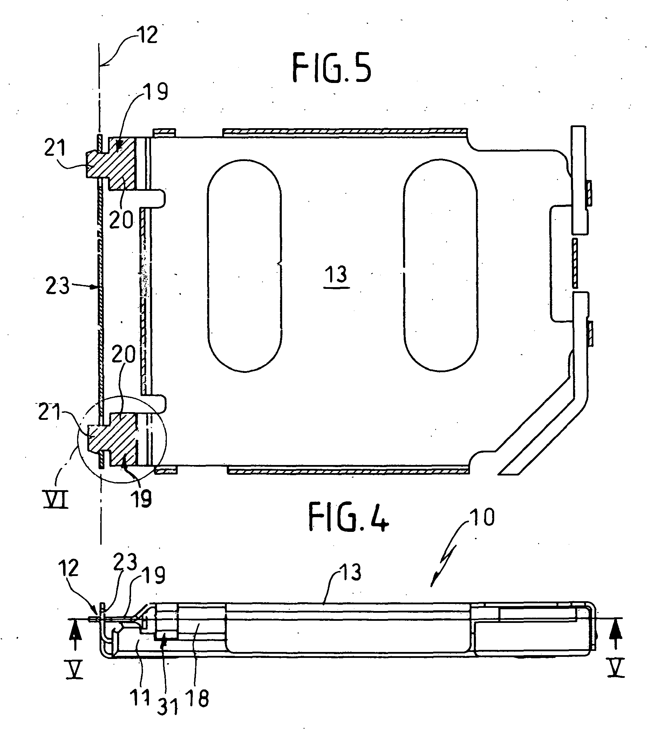

Wie ausgeführt, ist der Deckel 13 an seiner bezüglich Fig. 1 hinteren Schmalkante über die Gelenkachse 12 mit dem Kontaktträger 11 schwenkbar verbunden. Er kann deshalb von einer gegenüber der Darstellung in Fig. 1 ggf. noch weiter geöffneten Stellung bis in die in Fig. 4 gezeigte Schließstellung verschwenkt werden. Einzelheiten dieser Scharnieranordnung zeigen die Fig. 2 bis 5.

An seiner rückwärtigen Schmalseite weist der Deckel 13 zwei aus dem Blechzuschnitt für den Deckel 13 ausgestanzte Federzungen 19 auf. Diese haben einen relativ breiten Basisabschnitt 20 und einen demgegenüber verjüngten freien Endabschnitt 21. Letzterer ist bis zum Durchführen durch Durchbrechungen 22 bestimmt, die in einer Blech-Lasche 23 vorgesehen sind. Diese Lasche 23 weist einen abgebogenen Verankerungsschenkel 24 auf, der im Korpus 14 des Kontaktträgers 11 verankert ist, z.B. fest eingesteckt oder darin eingegossen.

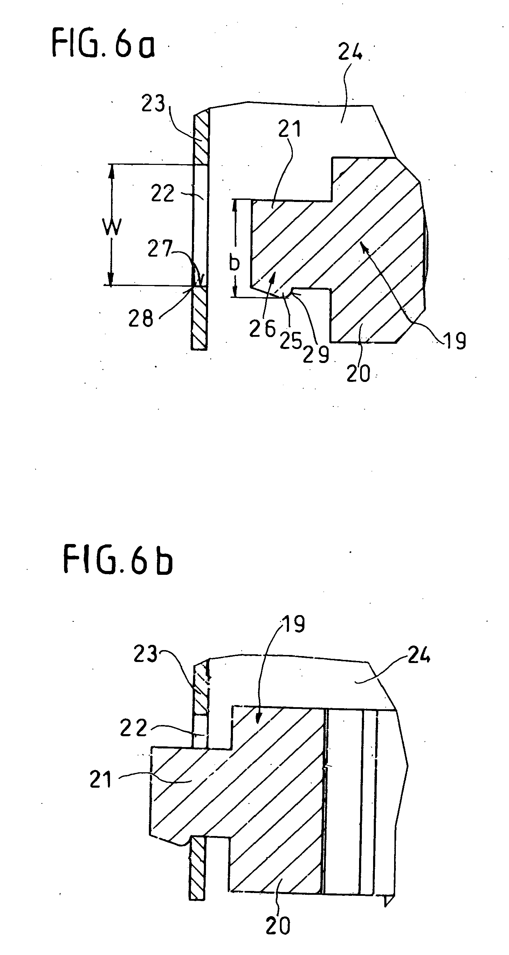

Die Scharnieranordnung ist in erheblich vergrößertem Maßstab schematisch in den Fig. 6a und 6b dargestellt, auf die sich die weitere Beschreibung nunmehr bezieht.

Die Durchbrechungen 22 sind spaltförmig und haben eine Spaltweite W. Der Endabschnitt 21 der Federzunge 19 ist hakenförmig ausgebildet. Die den (Wider)-Haken definierende Verbreiterung ist mit 25 bezeichnet. In diesem Bereich weist der Haken-Kopf 26 eine Breite b auf. Diese ist zumindest geringfügig kleiner als die Spaltweite W. Im übrigen ist, wie Fig. 6a dies zeigt, die Anordnung so getroffen, dass beim Durchstecken des Haken-Kopfes 26 durch die Durchbrechung 22 der Haken-Kopf 26 vorübergehend elastisch ausweichen muss, bis er hinter die Durchbrechung, also auf der Außenseite der Lasche 23 hinter den Rand der Durchbrechung 22 zurückschnappen kann. Hierbei ist also wesentlich, dass der äußere lichte Abstand der Haken 25 der beiden Federzungen 19 voneinander größer ist als der Abstand der den Haken 25 zugeordneten Randflächen 27 der beiden Durchbrechungen 22 in der Lasche 23.

Die Außenfläche 28 des Randbereichs 27 der Durchbrechung 22 bildet eine Hintergriffsfläche für eine korrespondierende Hakenfläche 29 des Hakens 25 am Kopfende der Federzunge 19.

Wie aus Vorstehendem deutlich wird, handelt es sich bei der Scharnieranordnung entsprechend der Erfindung um ein gelenkachsloses Steckscharnier, welches als einfache Steckrastverbindung ausgebildet ist. Entsprechend einfach ist auch der Zusammenbau von Deckel 13 und Kontaktträger 11, da der Deckel 13 lediglich mit einer einfachen Schiebebewegung in seiner Längsrichtung mit dem Kontaktträger 11 verbunden werden kann.

Anhand der Fig. 6a und 6b wurde die Scharnieranordnung auf der bezüglich Fig. 2 rechten rückwärtigen Seite der Kontaktiervorrichtung beschrieben. Die Geometrie der gegenüberliegenden linken Steckrastverbindung ist spiegelbildlich. Daraus versteht sich, dass die einmal durchgeführte Steckverbindung dauerhaft ist und sich selbsttätig nicht wieder lösen kann. Hierzu müssten, was ggf. möglich ist, die beiden Federzungen aufeinander zu bewegt werden, worauf der Deckel 13 vom Kontaktträger 11 entfernt werden könnte.

Wie bereits erwähnt, ist die die Durchbrechungen 22 aufweisende Lasche 23 fest mit dem Kontaktträger 11 verbunden. Sie weist im übrigen noch die Besonderheit auf, dass sie eine ausgeklinkte und im wesentlichen L-förmig unter den Kontaktträger 11 untergebogene Zunge 30 aufweist, deren Außenfläche im wesentlichen in der Ebene der Lötfüßchen 16 liegt und als Lötfläche zum Anschluss an eine Leiterbahn eines Schaltungsträgers in dem nicht dargestellten Gerät dient. Die Zunge 30 hat damit die Funktion einer Erdungszunge mit dem Zweck, elektrostatische Aufladung vom Deckel über die Zunge zum Potential der Schaltung zu leiten.

Eine weitere Besonderheit der Kontaktiervorrichtung 10 vorliegender Erfindung besteht in einer besonders einfachen und zweckdienlich gestalteten Aufnahme 31 für die nicht dargestellte Chipkarte 18. Die Aufnahme 31 umfasst nahe bei der Schwenkachse 12 in einander gegenüberliegende Anordnung je eine einwärts unter die Fläche des Deckels 13 gebogene Lasche 32 die, wie insbesondere Fig. 1 dies verdeutlicht, unterseitig und randaußenseitig begrenzende sehr kurze Aufnahmetaschen für eine Chipkarte 18 darstellen, die von der offenen Seite des Deckels 13, also bezüglich Fig. 1 von schräg rechts oben, eingesteckt wird. Die Einstecktiefe begrenzt ein rückwärtig nach unten umgebogener Randbereich 33 des Deckels 13.

Der besondere Zweck und Vorteil dieser Art der Ausbildung einer sehr kurzen, nur nahe der Scharnierachse 12 gelegenen Aufnahme 31 für eine Chipkarte 18 besteht darin, dass diese bezüglich des Deckels 13 eine in Fig. 2 gepunktet dargestellte Schräglage einnimmt, an der sie sehr viel einfacher mit zwei Fingern zu ergreifen ist als wenn sie, wie bei bisherigen schienenförmigen Deckel-Aufnahmen, bei geöffnetem Deckel 13 eine Position hätte, die in Fig. 2 mit durchgezogenen Linien dargestellt ist. Eine deckelparallele Stellung nimmt beim Erfindungsgegenstand die Chipkarte 18 erst dann ein, wenn der Deckel 13 auf den Kontaktträger 11 geschlossen ist und die Chipkarte 18 dann auf den Kontakten des Kontaktträgers 11 hält.

## Patentansprüche

1. Kontaktiervorrichtung (10) für eine Chipkarte (18), insbesondere für eine SIM-Karte eines elektronischen Geräts wie z.B. Chipkartenlesegerät, Mobiltelefon od.dgl., mit einem Kontaktträger (11) und darin aufgenommenen Kontaktelementen (15) zur Verbindung der Kontakte der Chipkarte (18) mit Leiterbahnen eines in dem Gerät enthaltenen Schaltungsträgers wie Leiterplatte und mit einem Deckel (13), der mittels einer Scharnieranordnung schwenkbar am Kontaktträger (11) gelagert ist, **dadurch gekennzeichnet, dass** die Scharnieranordnung gelenkachslos als Steckrastverbindung ausgebildet ist.

2. Kontaktiervorrichtung nach Anspruch 1, **dadurch gekennzeichnet, dass** die Scharnieranordnung Hakenflächen (29) einenteils und Hintergriffsflächen (28) für diese andernteils umfasst.

3. Kontaktiervorrichtung nach Anspruch 2, **dadurch gekennzeichnet, dass** die Hakenflächen (29) an Hakenstegen (21) einenteils und die Hintergriffsflächen (28) an Durchbrechungen (22) zum Durchstecken der Hakenflächen (29) andernteils ausgebildet sind.

4. Kontaktiervorrichtung nach Anspruch 2 oder 3, **dadurch gekennzeichnet, dass** sowohl die Hakenflächen (29) als auch die Hintergriffsflächen (28) an Metallteilen ausgebildet sind, deren einer dem Deckel (13) und deren anderer dem Kontaktträger (11) zugeordnet ist.

5. Kontaktiervorrichtung nach einem der Ansprüche 2 bis 4, **dadurch gekennzeichnet, dass** die Hakenflächen (29) werkstoffeinheitlich-stoffschlüssig mit dem Deckel (13) ausgebildet sind.

6. Kontaktiervorrichtung nach einem der Ansprüche 2 bis 4, **dadurch gekennzeichnet, dass** die Hintergriffsflächen (28) an einer mit dem Kontaktträger (11) fest verbundenen Lasche (23) ausgebildet sind.

7. Kontaktiervorrichtung nach Anspruch 6, **dadurch gekennzeichnet, dass** die Lasche (23) einen Verankerungsabschnitt (24) aufweist, mit dem sie an dem Kontaktträger (11) befestigt ist.

8. Kontaktiervorrichtung nach Anspruch 6 oder 7, **dadurch gekennzeichnet, dass** die Lasche (23) eine Lötzunge (30) zur elektrisch leitenden Verbindung des Deckels (13) mit einem Masseanschluss des in dem Gerät enthaltenen Schaltungsträgers aufweist.

9. Kontaktiervorrichtung nach einem der Ansprüche 2 bis 6, **dadurch gekennzeichnet, dass** die Hakenflächen (29) an Federzungen (19) des Deckels (13) ausgebildet sind, die einen Steg (21) und einen dem gegenüber verbreiterten Haken-Kopf (26) aufweisen.

10. Kontaktiervorrichtung nach einem der Ansprüche 2 bis 6 und 10, **dadurch gekennzeichnet, dass** die Durchbrechungen (24) spaltartig ausgebildet sind und eine Spaltweite (W) aufweisen, die jeweils wenigstens der Breite (b) eines Haken-Kopfes (26) der Federzungen (19) entspricht.

11. Kontaktiervorrichtung nach einem der vorhergehenden Ansprüche, **dadurch gekennzeichnet, dass** das Fügen der Scharnieranordnung durch Stecken des Deckels (13) in seiner Längsrichtung quer zur Scharnierachse (12) erfolgt.

12. Kontaktiervorrichtung nach dem Oberbegriff des Anspruchs 1, wobei der Deckel (13) eine Aufnahme (31) für die Chipkarte (18) aufweist, **dadurch gekennzeichnet, dass** die Aufnahme (31) lediglich in unmittelbarer Nachbarschaft zur Scharnierachse (12) vorgesehen ist.

13. Kontaktiervorrichtung nach Anspruch 10, **dadurch gekennzeichnet, dass** die Aufnahme (31) für die Chipkarte (18) aus randlich des Deckels (13) aus diesem ausgeformte Zungen (31) gebildet sind, die kurze Aufnahmetaschen für in Einsteckrichtung der Chipkarte (18) betrachtet vorn liegende Seitenrandbereiche der Chipkarte (18) ausbilden.

14. Kontaktiervorrichtung nach Anspruch 12 oder 13, **gekennzeichnet durch** eine Anordnung und/oder Ausbildung der Aufnahme (31) für die Chipkarte (18) derart, dass diese bei geöffnetem Deckel (13) eine Schräglage zwischen Deckel (13) und Kontaktträger (11) erhält, in der sie sich leicht greifen lässt.
